# EUROPÄISCHE PATENTSCHRIFT

(11) **EP 0 662 891 B1**
(45) Veröffentlichungstag und Bekanntmachung des Hinweises auf die Patenterteilung: **15.01.1997**
(21) Anmeldenummer: 93920776.7
(22) Anmeldetag: 20.09.1993
(51) Int. Cl.: B60T 8/34, B60T 8/36, B60T 8/40, F15B 1/04

(54) **HYDRAULIKAGGREGAT FÜR SCHLUPFGEREGELTE BREMSANLAGEN**
HYDRAULIC AGGREGATE FOR DRIVE SLIP-REGULATED BRAKING SYSTEMS
UNITE HYDRAULIQUE POUR SYSTEMES DE FREINAGE A REGULATION ANTIPATINAGE A L'ENTRAINEMENT

(30) Priorität: 09.10.1992 DE 4234013; 27.02.1993 DE 4306222
(43) Veröffentlichungstag der Anmeldung: 19.07.1995
(60) Teilanmeldung: 95114028.4
(73) Patentinhaber: ITT Automotive Europe GmbH, 60488 Frankfurt am Main (DE)
(72) Erfinder: ZAVISKA, Dalibor, D-65760 Eschborn (DE)
(86) Internationale Anmeldenummer: EP9302543
(87) Internationale Veröffentlichungsnummer: WO9408830

(56) Entgegenhaltungen:
- EP-A- 0 358 127
- EP-A- 0 373 551
- EP-A- 0 478 933
- WO-A-91/16220
- DE-A- 2 128 168
- DE-A- 4 107 625
- GB-A- 2 257 216

## Beschreibung

Die Erfindung betrifft ein Hydraulikaggregat für schlupfgeregelte Bremsanlagen nach dem Oberbegriff des Anspruchs 1.

In der DE-A-41 07 625 ist bereits ein Hydraulikaggregat für schlupfgeregelte Kraftfahrzeug-Bremsanlagen beschrieben, dessen Ventilaufnahmekörper unmittelbar an einem die Speicher-, Druckerzeuger- und Antriebselemente aufweisen Zentralgehäuse angeflanscht ist. Die vorbeschriebenen Fuktionselemente sind allseitig verteilt in Aufnahmebohrungen des Zentralgehäuses angeordnet, so daß zur Herstellung des komplizierten Zentralgehäuses und des separat zu fertigenden Ventilaufnahmekörpers im Bearbeitungszentrum unter anderem eine Vielzahl von Arbeitspositionen im Ablaufprogramm des Werkzeugautomaten zu berücksichtigen sind. Überdies ist die Gerätegröße des Hydraulikaggregates aufgrund des erläuterten Aufbaus nicht mehr zu verkleinern, was die Wahl der Einbaulage bzw. des Einbauortes erschwert.

Die EP-A-0 373 551 weist ein Hydraulikaggregat gemäß dem Oberbegriff des Anspruchs 1 auf, mit einem Aufnahmekörper, in dem zwischen zwei Ventilreihen eine Aufnahmebohrung für einen Druckerzeuger angeordnet ist, an die sich jeweils zu beiden Seiten eine Aufnahmebohrung für eine Geräuschdämpfungseinrichtung anschließt, die sich koaxial zur Achse der Druckerzeugerelemente erstreckt. Senkrecht zur Achse der Druckerzeugerelemente befindet sich jeweils ein Druckmittelspeicher, der sich mit seiner Körperachse parallel zu den Ventilachsen im Zwischenraum der Ventilreihen befindet. Damit bestimmt die Größe des Druckspeichers einerseits das erforderliche Tiefenmaß des Aufnahmekörpers und andererseits die Abstände der Ventile. Die Breite des Aufnahmekörpers ist sowohl durch die Anzahl der Ventile einer Ventilreihe als auch durch die dem Druckerzeuger nachgeschaltete Dämpfungskammer bestimmt, so daß sich ein verhältnismäßig großer Aufnahmekörper ergibt, dessen beiderseits zur Achse des Druckerzeugers parallel gelegenen Seitenflächen zur Aufnahme von Druckmittelanschlüssen und zur elektrischen Verbindung des Motors mit der am Aufnahmekörper angebrachten Steuer- und Regelelektronik genutzt werden. Damit ergibt sich ein Hydraulikaggregat mit relativ großer Breite und Länge, das hinsichtlich der gewählten Anordnung des Druckmittelspeichers und des Geräuschdämpfers nicht beliebig verändert werden kann. Die Einbettung des Druckspeichers zwischen den Ventilreihen begrenzt die Größe der für den Druckspeicherkolben erforderlichen Aufnahmebohrung, wobei auch der Hub des Druckspeicherkolbens durch die Befestigungsplatte für die Ventilreihen und der darüber angeordneten elekrischen Bauteile nicht beliebig veränderbar ist und die Gesamtlänge des Hydraulikaggregats unter anderem durch die Länge des Motors nachteilig beeinflußt. In einer Ventilreihe sind jeweils in der Grundstellung elektromagnetisch geschlossene als auch elektromagnetisch geöffnete Ventile angeordnet. Dies erforderte eine entsprechend angepaßte Ausrichtung des Druckspeichers und der Druckmittelkanäle.

Eine weitere konstruktive Lösungsvariante zum Aufbau eines Hydraulikaggregates geht aus der DE-A-2 128 168 hervor, wonach sowohl die Ein- wie auch Auslaßventile koaxial zueinander in einer einzigen Ventilreihe an einem Aufnahmekörper ausgerichtet sind, die seitlich von einem etwa zentral am Aufnahmekörper angebrachten Motor zum Antrieb einer Pumpe begrenzt ist. Die vom Motor angetriebene Pumpe befindet sich quer zur Motor- und Ventilachse angeordnet, wobei das von einem Auslaßventil kommende Fluid über ein Rückschlagventil zur Pumpe angesaugt wird und von dort über ein nachfolgendes Rückschlagventil einem Dämpfungsspeicher zugeführt wird, der seitlich an der Außenfläche des Aufnahmekörpers angebracht ist. Über ein zur Radbremse und zum Hauptzylinder führenden Druckanschluß im Aufnahmekörper wird das vom Auslaßventil abgelassene Druckmittel pulsationsgedämpft dem Bremskreis zugeführt. In Anbetracht der Größe der Anordnung der einzelnen Funktionselemente am Aufnahmekörper ist die Wahl der Einbaulage bzw. der Einbauort des Hydraulikaggregates erschwert.

Daher ist es die Aufgabe der Erfindung, ein möglichst kompaktbauendes Hydraulikaggregat zu schaffen, das sich auf möglichst einfache Weise präzise und kostengünstig herstellen läßt.

Diese Aufgabe wird erfindungsgemäß durch die Merkmale der Patentansprüche 1 gelöst.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Fig. 1: eine Draufsicht auf das Hydraulikaggregat,
- Fig. 2: einen Querschnitt des Hydraulikaggregates an der Schnittstelle A-A nach Figur 1,
- Fig. 3: einen Schnitt durch das Hydraulikaggregat an der Stelle B-B in Figur 2,
- Fig. 4: einen Querschnitt durch das Hydraulikaggregat an der Schnittstelle C-C gemäß Figur 2,
- Fig. 5: eine alternative Ausführungsform zur Ausbildung und zum hydraulischen Anschluß der die Dämpfungskammer bildenden Aufnahmebohrung,
- Fig. 6: eine weitere Ausführungsform zur Dämpfungskanner.
- Fig. 7: eine Ausführungsform zur Gestaltung der den Druckspeicherkolben aufweisenden Aufnahmebohrung.

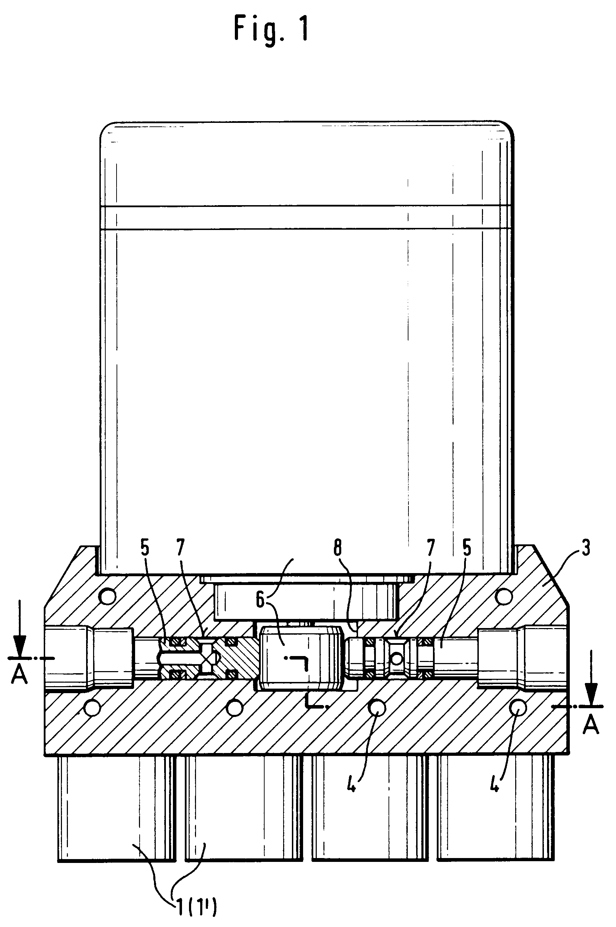

Die Figur 1 skizziert die grundlegende Anordnung der Ventil 1,1'-, Druckerzeuger 5 - und Antriebselemente 6 im Ventilaufnahmekörper 3. Sowohl die Aufnahmebohrung 8, welche die aus - Elektromotor und Exzenterantrieb gebildeten Antriebselemente 6 aufnimmt, wie auch die Ventilelemente 1,1' sind achsparallel ausgerichtet. Hierzu erstreckt sich die Aufnahmebohrung 7 des als doppelflutige Radialkolbenpumpe ausgeführten Druckzeugerelementes 5 quer zur Achse des Elektromotors und zu den Ventilachsen. In der nachfolgend gezeigten Schnittdarstellung des Ventilaufnahmekörpers 3 befindet sich somit das Druckerzeugerelement 5 zwischen den Anschlußebenen der Ventilelemente 1,1' und des Elektromotors.

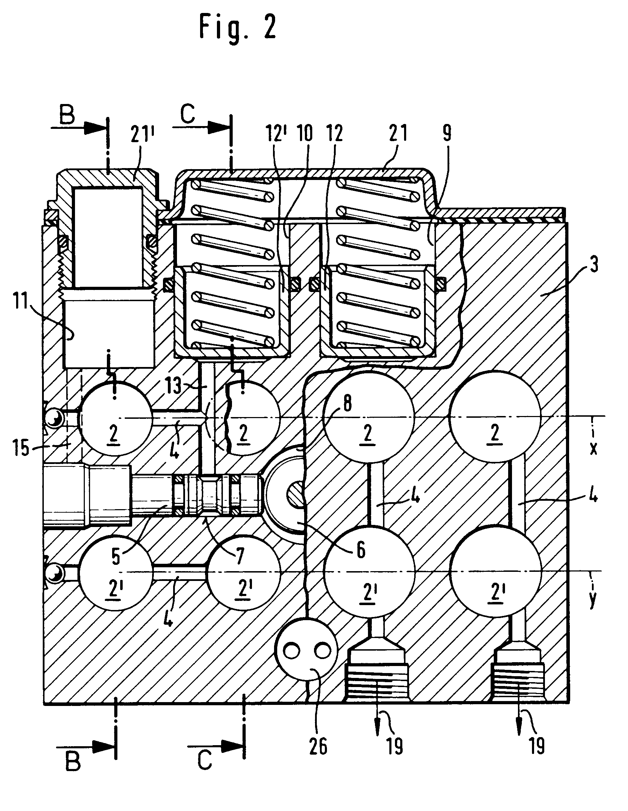

Figur 2 zeigt einen Querschnitt durch den Ventilaufnahmekörper 3 an der Stelle A-A gemäß Figur 1. Der Ventilaufnahmekörper 3 weist eine im wesentlichen quadratische Blockform auf, in die zwei parallel zueinander liegende Reihen von Ventilaufnahmebohrungen 2,2' eingebracht sind. Zwischen den beiden Ventilreihen x,y befindet sich die hierzu achsparallel verlaufende Aufnahmebohrung 7 des Druckerzeugerelementes 5. Außerhalb zu den beiden Ventilreihen x,y gelegen, befindet sich die lotrecht zu den Ventilaufnahmebohrungen 2,2' angeordneten Aufnahmebohrungen 9,10 für die als Bestandteil der Speicherelemente wirksamen Druckspeicherkolben 12,12'. Die Druckmittelbohrungen 4,13 verbinden die Ventilaufnahmebohrungen 2 der in der Grundstellung als Auslaßventile wirksamen elektromagnetisch geschlossenen Ventilelemente 1,1' mit den Aufnahmebohrungen 9,10 der Speicherelemente. Eine neben den Aufnahmebohrungen 9,10 der Speicherelemente und dazu parallel angeordnete weitere Aufnahmebohrung 11 steht über eine Druckmittelbohrung 15 mit dem druckseitigen Pumpenabschnitt der Aufnahmebohrung 7 in Verbindung. Hydraulische Druckspitzen des Druckerzeugeelementes gelangen somit zur Dämpfung der Pumpengeräusche in die zugeordnete Aufnahmebohrung 11. Die Aufnahmebohrung 11 ist entweder über einen separaten Deckel oder mitunter durch den als Tiefziehteil kappenförmig ausgebildeten Deckel 21 der Aufnahmebohrungen 9,10 integriert. In der gezeigten Ausführungsform eignet sich der als Schraubverschlußstopfen ausgebildete separate Deckel 21 gleichzeitig zur Einspannung und Anpressung des die beiden Aufnahmebohrungen 9,10 verschließenden Deckels 21, so daß Befestigungsmittel für den Deckel 21 eingespart werden können. Die den Speicherelementen zugewandte Ventilreihe x nimmt ausschließlich die in der Grundstellung elektromagnetisch geschlossenen Ventilelemente (Auslaßventile) auf. Die zweite Ventilreihe y faßt die in der Grundstellung elektromagnetisch geöffneten Ventilelemente (Einlaßventile) zusammen. Hierdurch ergibt sich die abbildungsgemäße Kanalführung, wonach die Druckmittelbohrungen 4 den Druckmittelverbraucher 19 jeweils mit den Ventilaufnahmebohrungen 2,2' der Einlaß- und Auslaßventile verbinden. Durch die gezeigte Verbohrung des Ventilaufnahmekörpers 3 ist u.a. auch vorgesehen, die Kabeldurchführung 26 für den Elektromotor unmittelbar im Ventilaufnahmekörper 3 anzuordnen.

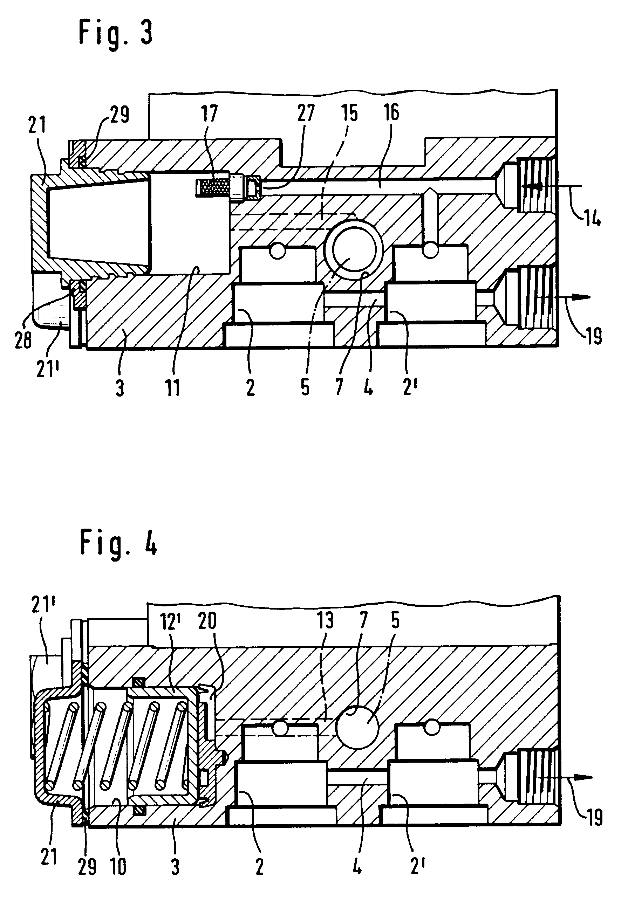

Die Figur 3 zeigt einen auf der Blattfläche gedrehten Vertikalschnitt an der Stelle B-B gemäß Figur 2, der die Kanalführung und die Ausformungen der Aufnahmebohrung 2,2',11 verdeutlicht. Die Ventilaufnahmebohrungen 2,2' stehen über eine Druckmittelbohrung 4 mit dem Druckmittelverbraucher 19 (Radbremse) in Verbindung. Die Ventilaufnahmebohrung 2' weist am Gehäuseboden einen weiteren Kanalabzweig auf, der in den die Aufnahmebohrung 11 mit dem Druckmittelversorger 14 verbindenden Kanal 16 einmündet. Der Kanal 16 liegt zum Zwecke einer ungehinderten Entlüftung der Aufnahmebohrung 11 möglichst weit am Außenrand und damit in erhöhter Lage zur Aufnahmebohrung 11. Ein im Einmündungsbereich des Kanals 16 in die als Dämpfungskammer wirksame Aufnahmebohrung 11 eingesetztes Filterelement 17 verhindert den Transport von Schmutzpartikeln in die Bohrung der Blende 27, die ebenfalls im Kanal 6 angeordnet ist. Wahlweise zu dem in Figur 2 als Schraubverschluß ausgebildeten Deckel 21 ist dieser in Figur 3 im Halbschnitt mittels einer selbsteinschneidenden Verbindung sowie in den Ventilaufnahmekörper 3 konisch erweitert ausgeführt. Der härtere Werkstoff des Deckels 21 verdrängt beim Einpressen sodann das weichere Material des Ventilaufnahmekörpers 3 (z.B. Aluminium) in die nasenförmig abgesetzten Umfangsnuten des Deckels 21, womit ein fester und flüssigkeitsdichter Sitz des Deckels 21 geschaffen ist. Die konische Erweiterung des Deckels 21 begünstigt das Entweichen von in der Ausnahmebohrung 11 befindlichen Lufteinschlüssen. Da der zum Verschluß der Aufnahmebohrung 11 vorgesehene Deckel 21 gleichzeitig den als Tiefziehteil kappenförmig gestalteten weiteren Deckel 21 abdichtend zu halten hat, ist vorzugsweise eine als Moosgummi ausgeführte Dichtplatte 29 dazwischengelegt. Der als Tiefziehteil ausgeführte Deckel 21 ist partiell an seiner Anpreßfläche mit Ausdrückungen 28 versehen, die infolge des daraus abgeleiteten Zwischenraums ein Verquetschen und damit eine Beschädigung der Dichtplatte 29 verhindern. Die für das Druckerzeugerelement vorgesehene Aufnahmebohrung 7 befindet sich äußerst kompaktbauend von dem Kanal 16, der Druckmittelbohrung 4 und den Ventilaufnahmebohrungen 2,2' umgeben im Ventilaufnahmekörper 3, so daß die normalerweise nur in einer vorgelagerten Schnittstelle in der Zeichnung ersichtliche weitere Druckmittelbohrung 15 eine ungehinderte hydraulische Verbindung zur Aufnahmebohrung 11 herstellt.

In Figur 4 ist eine in Figur 2 gekennzeichnete weitere Schnittstelle C-C in der Seitenansicht skizziert, welche den Anschluß der Druckmittelbohrung 13 an der Saugseite für das Druckerzeugerelement in der Aufnahmebohrung 7 verdeutlicht. Zur ungehinderten Entlüftung der den Druckspeicherkolben 12' aufweisenden Aufnahmebohrung 10, ist zwischen dem Druckspeicherkolben 12 und der zugehörigen Einmündung der Druckmittelbohrung 13 eine im wesentlichen scheibenförmige Umlenkeinrichtung 20 befestigt, die über ihre in Entlüftungsrichtung nach oben gerichtete partielle Gehäuseöffnung eine Umlenkung der Druckmittelsäule bewirkt. Die Umlenkeinrichtung 20 ist mittels eines Führungszapfens gegen Positionsveränderung geschützt und reibschlüssig oder formschlüssig befestigt.

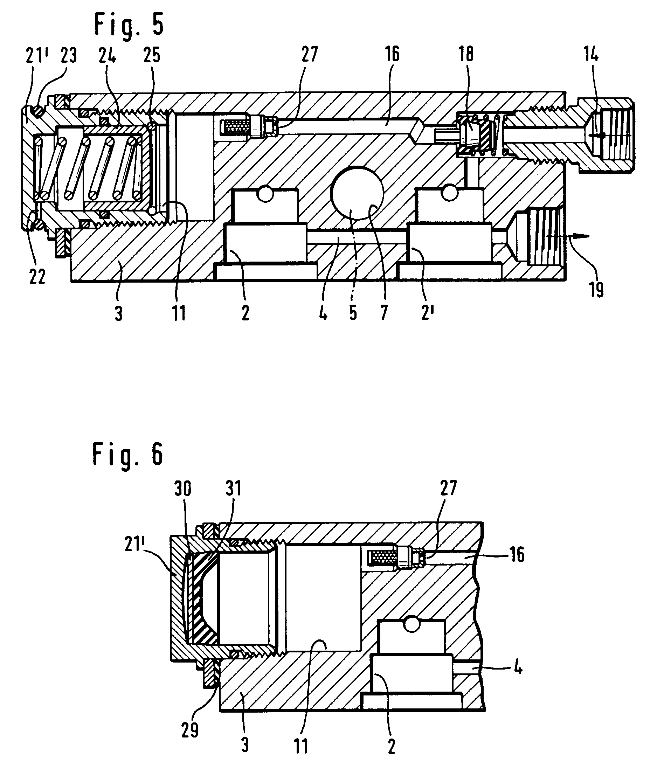

In Figur 5 ist abweichend von den vorangegangenen Ausführungsformen die als Volumenschlucker verwendete Aufnahmebohrung 11 ebenfalls, wie die voran beschriebene Speicherelemente, konstruktiv mit einem federbelasteten Dämpfungskolben 24 versehen. Der Dämpfungskolben 24 ist im hülsenförmigen Schaft des Deckels 21 abgedichtet geführt, wobei in der Grundposition des Kolbens dieser durch die Federkraft beaufschlagt an einem im Schaft des Deckels 21 eingesetzten Sprengring 15 anliegt. Zur Entlüftung und Fortführung von Druckleckage ist der Deckelrand von einer Leckage- und Druckentlastungsbohrung 22 durchdrungen, die von einem am Deckelrand umlaufenden Dichtring 23 normalerweise verschlossen ist. In Folge der variablen Volumenaufnahme der Aufnahmebohrung 11 durch den Dämpfungskolben 24, weist der Kanal 16 zusätzlich ein in Richtung des Dämpfungkolbens 24 wirksames Rückschlagventil 18 auf, womit eine unerwünschte Volumenzunahme bei Betätigung des Bremspedals verhindert wird. Der Zulauf von Druckmittel über das in die Ventilaufnahmebohrung 2' eingesetzte Einlaßventil zur Radbremse bleibt von der Schaltstellung des Rückschlagventils 18 unbeeinflußt. Das durch den Dämpfungskolben 24 in der Aufnahmebohrung 11 zwischengespeicherte Druckmittelvolumen verhindert während des Pumpenbetriebs eine die Hauptzylinder-Manschetten schädigende Rückstellbewegung der Arbeitskolben.

Eine weitere Ausgestaltungsvariante zur Ausbildung der als Dämpfungskammer wirksamen Aufnahmebohrung 11 (vergleiche Figur 2, 3 und 5) sieht vor, die Wirkungsmechanismen eines Reflexionsdämpfers mit denen eines Speicherdämpfers zu vereinigen. Dies zeigt beispielhaft die Figur 6, wonach der die Aufnahmebohrung 11 verschließende Deckel als Speicherdämpfer aus einer Reihenschaltung von einer Membran 30 und einer Topfmanschette 31 gebildet ist, während die Reflexionsdämpfung aus dem bereits beschriebenen Zusammenwirken von zwischengespeicherten Druckmittelvolumen mit Hilfe einer Blende 27 zustande kommt.

In einer Zusammenfassung wird nachfolgend die Funktionsweise des nach Figur 1 bis 6 gezeigten Hydraulikaggregates für einen Radbremskreis einer schlupfgeregelten Kraftfahrzeugbremsanlage erläutert.

Die Druckmitteleinspeisung in das Hydraulikaggregat erfolgt durch Betätigung des Hauptzylinders (Druckmittelversorger 14), womit Druckmittel in die das Einlaßventil aufnehmende Ventilaufnahmebohrung 2' und damit zur Radbremse (Druckmittelverbraucher 19) gelangt. Die das Einlaßventil mit dem Auslaßventil verbindende Druckmittelbohrung 4 steht ebenfalls unter dem fußkraftproportionalen Druck, während das Auslaßventil die zum Druckspeicherkolben 21 führende Druckmittelbohrung 13 sperrt. Mit Beginn der Bremsschlupfregelung treibt der Elektromotor (Antriebselement 6) die Radialkolbenpumpe (Druckerzeugerelement 5) an, womit das über die Druckmittelbohrung 13 jeweils aus dem Speicherelement (Aufnahmebohrung 9,10) angesaugte Druckmittelvolumen über die Druckmittelbohrung 15 in die Geräuschdämpfungskammer (Aufnahmebohrung 11) gefördert wird, um von dort über die Blende 27 den Kanal (16) auf den Tandemhauptzylinder (Druckmittelversorger 14) zu wirken, wobei über die Ventilaufnahmebohrungen 2,2' die Druckmodulation in Abhängigkeit von der elektromagnetischen Ansteuerung der Einlaß- und Auslaßventile (Ventilelemente 1,1') in jeder entsprechend zugehörigen Radbremse (Druckmittelverbraucher 19) erfolgt.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand einer Zeichnung näher dargestellt und erläutert werden.

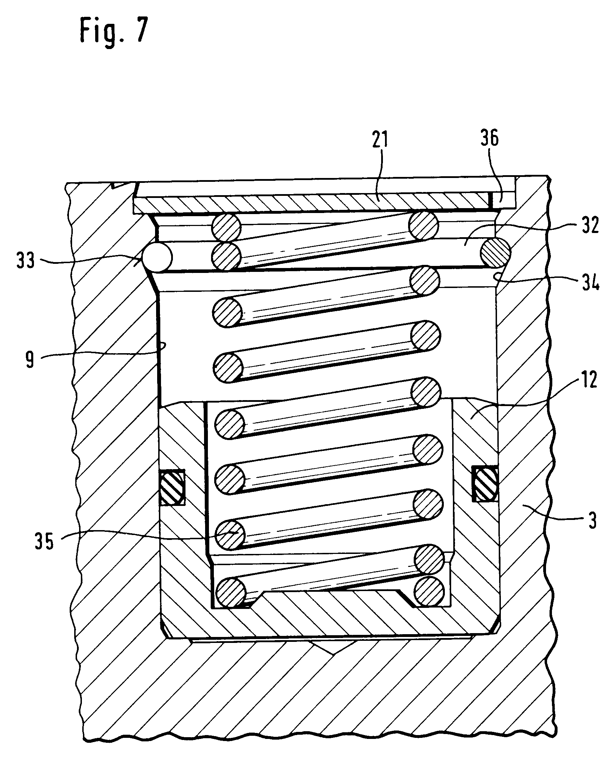

Die Figur 7 zeigt einen Ausschnitt des Ventilaufnahmekörpers 3 im Bereich einer Aufnahmebohrung 9, die den im Querschnitt gezeigten Druckspeicherkolben 12, den Anschlagkörper 32 und den Deckel 21 aufnimmt. Erfindungsgemäß ist das Anschlagteil 32 in einer als Ringnut ausgebildeten Ausnehmung 33 in die Aufnahmebohrung 9 eingesetzt, wobei die Aufnahmebohrung 9 zur leichten Demontage des als Sprengring bzw. Drahtring ausgeführten Anschlagteil 32 mit einer Aushebeschräge 34 versehen ist, die als konische Erweiterung des Nenndurchmessers der Aufnahmebohrung 9 in den Ringnut-Außendurchmesser übergeht. Die Stirnfläche des als topfförmiges Tiefziehteil ausgebildeten Druckspeicherkolbens 12 ist nach außen gerichtet am Umfang derart angephast, daß beim Anschlagen des unter hohem Druck (Auslegungsdruck ca. 350 bar) stehenden Druckspeicherkolbens 12 am Anschlagteil 32 eine günstige Krafteinleitung in die Ringnut 33 vollzogen werden kann. Durch diese Kraftumlenkung in die Wandung der Aufnahmebohrung 9 ist der zum Verschluß der Aufnahmebohrung 9 vorgesehene Deckel 21 von hydraulischen Kräften frei, so daß dieser lediglich die Stützkraft (Federkraft ca. 100 Newton) der Druckfeder 35 aufzunehmen hat. Der Deckel 21 kann folglich als äußerst dünnwandige Metall- oder Kunststoffscheibe ausgebildet werden, die form- und/oder reibschlüssig die Aufnahmebohrung 9 verschließt. Die Abbildung zeigt beispielhaft eine Ringnut zur Aufnahme des Anschlagteils 32. Durch die einfache, platzsparende Befestigung des Anschlagteils 32 in der Aufnahmebohrung 9 ist es möglich zur Einstellung verschiedener Speichervolumina mehrere Ringnuten hintereinander in der Aufnahmebohrung 9 anzuordnen, so daß nach Bedarf ein axiales versetzen des Anschlagteils 32 gewährleistet ist. Der Erfindungsgegenstand ermöglicht eine besonders kurze, kosten- und gewichtsreduzierte Bauweise des Druckspeichers, ohne hierdurch Nachteil in Kauf nehmen zu müssen. Bezüglich des Be- und Entlüftens des Druckspeichers ist beispielsweise vorgesehen, den Rand des Deckels 21 mit einer Öffnung 36 zu versehen, die bei Bedarf mit einem Spritzwasserschutz versehen werden kann. Sowohl die Montage des Druckspeicherkolbens 12 wie auch die Demontage des Anschlagteils 32 in der Aufnahmebohrung 9 werden durch die in die Aufnahmebohrung 9 gerichtete Anphasung 34 begünstigt. Die Anphasung 34 verhindert eine Beschädigung des in die Ringnut am Druckspeicherkolben 12 angeordneten Dichtelementes während des Einfügens des Kolbens. Weiterhin läßt sich das Anschlagteil 32 erheblich leichter zum Zwecke der Demontage des Druckspeichers mittels der als Aushebeschräge wirksamen Anphasung 34 entfernen.

### Bezugszeichenliste:

- 1,1': Ventilelemente
- 2,2': Ventilaufnahmebohrung
- 3: Ventilaufnahmekörper
- 4: Druckmittelbohrung
- 5: Druckerzeugerelement
- 6: Antriebselement
- 7,8,9,10,11: Aufnahmebohrungen
- 12,12': Druckspeicherkolben
- 13: Druckmittelbohrung
- 14: Druckmittelversorger
- 15: Druckmittelbohrung
- 16: Kanal
- 17: Filterelement
- 18: Rückschlagventil
- 19: Druckmittelverbraucher
- 20: Umlenkeinrichtung
- 21: Deckel
- 22: Leckage- und Druckentlastungsbohrung
- 23: Dichtring
- 24: Dämpfungskolben
- 25: Sprengring
- 26: Kabeldurchführung
- 27: Blende
- 28: Ausdrückung
- 29: Dichtplatte
- 30: Membran
- 31: Topfmanschette
- 32: Anschlagteil
- 33: Ausnehmung
- 34: Anphasung
- 35: Druckfeder
- 36: Öffnung

## Patentansprüche

1. Hydraulikaggregat für schlupfgeregelte Bremsanlagen, mit mehreren an einem Aufnahmekörper (3) angeordneten hydraulischen, mechanischen und /oder elektrisch betätigbaren Funktionselementen, wie Speicher-, Ventil-, Druckerzeuger- und Antriebselemente (1,1',5,6), mit mehreren die Funktionselemente miteinander verbindenden Druckmittelkanälen (4,15,16), die eine hydraulisch schaltbare Verbindung zwischen wenigstens einer Druckmittelquelle (14) und einem Druckmittelverbraucher (19) herzustellen vermögen sowie mit einer Steuervorrichtung, die mittels elektrischer Leiter mit den Ventil- und Antriebselementen (1,1',6) verbindbar ist, wobei die Ventilelemente (1,1') in mehreren Ventilaufnahmebohrungen (2,2') des Ventilaufnahmekörpers (3) einer ersten und einer zweiten Ventilreihe (x,y) angeordnet sind, daß zwischen den diametral ausgerichteten beiden Ventilreihen (x,y) mehrere die Ventilelemente (1,1') miteinander verbindende Druckmittelbohrungen (4) und die das Druckerzeugerelement (5) und das Antriebselement (6) aufweisenden Aufnahmebohrungen (7,8) vorgesehen sind, wobei das Druckerzeugerelement (5) zwischen den Anschlußebenen der Ventilelemente (1,1') und des Antriebselementes (6) gelegen ist, dadurch **gekennzeichnet**,
- daß zur Druckmittelspeicherung außerhalb von beiden Ventilreihen (x,y) weitere achsparallel zueinander ausgerichtete Aufnahmebohrungen (9,10) in den Ventilaufnahemkörper (3) einmünden, die lotrecht zu den Ventilaufnahmebohrungen (2,2') angeordnet sind,
- zur Druckmittelspeicherung in die Aufnahmebohrungen (9,10) jeweils ein Druckspeicherkolben (12,12') eingesetzt ist, der über eine Druckmittelbohrung (13) jeweils eine Verbindung zur Aufnahembohrung (7) des Druckerzeugerelementes (5) und zur Aufnahembohrung (2) eines in der Grundstellung elektromagnetisch geschlossenen Ventilelementes (1) aufweist,
- daß die in der Grundstellung elektromagnetisch geschlossenen Ventile (1) ausschließlich in der den Druckspeicherkolben (12,12') zugewandte ersten Ventilreihe (x) angeordnet sind,
- und daß die in der Grundstellung elektromagnetisch geöffneten Ventilelemente (1') in der zweiten Ventilreihe (y) angeordnet sind.

2. Hydraulikaggregat nach Anspruch 1, **dadurch gekennzeichnet**, daß neben den Aufnahmebohrungen (9,10) für die Druckspeicherkolben (12,12') jeweils eine weitere Aufnahmebohrung (11) des Geräuschdämpfers angeordnet ist, die jeweils über eine Druckmittelbohrung (15) mit der Aufnahmebohrung (7) des Druckerzeugerelementes (5) verbunden ist.

3. Hydraulikaggregat nach Anspruch 2, dadurch **gekennzeichnet**, daß die Druckmittelbohrung (15) jeweils über die hermetisch abschließbare Aufnahmebohrung (11) eine hydraulische Verbindung zwischen der Druckseite des Druckerzeugerlementes (5) und des zum Druckmittelversorger (14) führenden Kanals (16) herstellt.

4. Hydraulikaggregat nach Anspruch 1, dadurch **gekennzeichnet**, daß die das Druckerzeugerelement (5) aufweisende Aufnahmebohrung (7) zwischen den beiden Ventilreihen (x,y) parallel angeordnet ist.

5. Hydraulikaggregat nach Anspruch 1, dadurch **gekennzeichnet**, daß die die Antriebselemente (6) aufweisende Aufnahmebohrung (8) senkrecht sowie konzentrisch zur Aufnahmebohrung (7) des Druckerzeugers gerichtet ist.

6. Hydraulikaggregat nach Anspruch 3, dadurch **gekennzeichnet**, daß der Kanal (16), der die hermetisch abschließbare weitere Aufnahmebohrung (11) mit dem Druckmittelversorger (14) verbindet, ein in die Aufnahmebohrung (11) erstreckendes Filterelement (17) und eineBlende (27) aufweist, und daß der Kanal (16) in Montageposition des Hydraulikaggregats eine die Entlüftbarkeit der Aufnahmebohrung (11) fördernden geodätischen Höhenunterschied zur Druckmittelbohrung (15) des Druckerzeugers ( 5) aufweist.

7. Hydraulikaggregat nach Anspruch 3, dadurch **gekennzeichnet**, daß der Kanal (16) mit einem in Richtung des Druckmittelversorgers (14) öffnenden Rückschlagventil (18) versehen ist, und daß zwischen dem das Rückschlagventil (18) mit dem Druckmittelversorger (14) verbindenden Kanalabschnitt jeweils eine weitere hydraulische Verbindung über jeweils ein in der Grundstellung elektromagnetisch offengeschaltetes Ventilelement (2') zum Druckmittelverbraucher (19) vorgesehen ist.

8. Hydraulikaggregat nach Anspruch 1 oder 2, dadurch **gekennzeichnet**, daß in die Aufnahmebohrung(9,10) des Druckspeicherelementes und/oder in die als Dämpferkammer wirksame und hermetisch abschließbare weitere Aufnahmebohrung (11) ein im wesentlichen scheibenförmige und vorzugsweise formschlüssig ausgerichtete Druckmittelumlenkeinrichtung (20) angeordnet ist, deren geodätisch erhöht gelegene Druckmittelöffnung die Entlüftbarkeit der Aufnahmebohrungen (9,10) begünstigt.

9. Hydraulikaggregat nach Anspruch 1, dadurch **gekennzeichnet**, daß die außerhalb den beiden Ventilreihen (x,y) im Ventilaufnahemkörper (3) angeordneten Aufnahmebohrungen (9,10) mittels eines einstückigen Deckels (21) verschließbar sind.

10. Hydraulikaggregat nach Anspruch 9, dadurch **gekennzeichnet**, daß der Deckel (21) als Tiefziehteil ausgebildet ist.

11. Hydraulikaggregat nach Anspruch 9, dadurch **gekennzeichnet**, daß der Deckel (21) mittels einer selbsteinscherenden Verbindung im Ventilaufnahmekörper (3) gehalten ist.

12. Hydraulikaggregat nach mindestens einem der vorhergehenden Ansprüche 9 bis 11, dadurch **gekennzeichnet**, daß der Deckel (21) mit einer Leckage- und Druckentlastungsbohrung (22) versehen ist, die mittels eines an der Deckelkontur umlaufenden Dichtringes (23) in der Funktion eines Rückschlagventils verschließbar ist.

13. Hydraulikaggregat nach Anspruch 1, dadurch **gekennzeichnet**, daß die Druckspeicherkolben (12,12') als Tiefziehteile ausgebildet sind.

14. Hydraulikaggregat nach Anspruch 1, dadurch **gekennzeichnet**, daß in mehreren außerhalb zweier Ventilreihen angeordneten Aufnahmebohrungen des Aufnahemkörpers (3) jeweils ein Druckspeicherkolben (12) derart eingesetzt ist, daß dieser an einem in die Aufnahembohrung (9) eingelassenen ringförmigen Anschlagteil (32) anlegbar ist, und daß dem Anschlagteil (32) ein Deckel (21) zugeordnet ist, der das Anschlagteil (32) in der Aufnahmebohrung (9) verschließt.

15. Hydraulikaggregat nach Anspruch 14, dadurch **gekennzeichnet**, daß das Anschlagteil (32) in Richtung der Bohrungstiefe der Aufnahmebohrung (9) mittels mehrerer Ausnehmungen (33) in der Wandung der Aufnahmebohrung (9) variabel positionierbar ist.

16. Hydraulikaggregat nach Anspruch 14, dadurch **gekennzeichnet**, daß der Druckspeicherkolben (12) topfförmig ausgebildet ist, der mit seiner zur Außenkontur des Ventilaufnahmekörpers (3) gerichteten Öffnung am Anschlagteil (32) anlegbar ist.

17. Hydraulikaggregat nach Anspruch 15, dadurch **gekennzeichnet**, daß die Ausnehmung (33) als Ringnut ausgeführt ist, die mit einer zum Druckspeicherkolben (12) ausgerichteten Anphasung (34) versehen ist, und daß in die Ausnehmung (33) ein als Anschlagteil (32) wirksamer Drahtring einrastbar ist.

## Claims

1. Hydraulic unit for slip-controlled brake systems including several hydraulically, mechanically and/or electrically operable functional elements arranged in an accommodating member (3), such as accumulator elements, valve elements, pressure generating and driving elements (1,1',5,6), several pressure fluid channels (4,15,16) which interconnect the functional elements and are able to provide a hydraulically operable connection between at least one pressure fluid source (14) and a pressure fluid consumer (19), and a control device which can be connected to the valve elements and driving elements (1,1',6) by way of electrical conductors, wherein the valve elements (1,1') are arranged in several valve accommodating bores (2,2') of the valve accommodating member (3) of a first and a second valve row (x,y), and between the two diametrically oriented valve rows (x,y) are provided several pressure fluid bores (4) interconnecting the valve elements (1,1'), and the location bores (7,8) accommodating the pressure generating element (5) and the driving element (6), and wherein the pressure generating element (5) is interposed between the connecting planes of the valve elements (1,1') and the driving element (6),
**characterised**
in that, for the storing of pressure fluid, outside the two valve rows (x,y), further paraxially aligned location bores (9,10) terminate into the valve accommodating member (3) which are arranged perpendicularly to the valve accommodating bores (2,2'),
in that, for the storing of pressure fluid, one pressure accumulator piston (12,12') is arranged in each of the location bores (9,10) and, by way of a pressure fluid bore (13), has a connection with the location bore (7) of the pressure generating element (5) and the location bore (2) of a valve element (1), which is electromagnetically closed in its normal position,
in that the valves (1) which are electromagnetically closed in their normal position are arranged exclusively in the first valve row (x) close to the pressure accumulator pistons (12,12'),
and in that the valve elements (1') which are electromagnetically opened in their normal position are arranged in the second valve row (y).

2. Hydraulic unit as claimed in claim 1,
**characterised** in that another location bore (11) of the noise damper is arranged beside each of the location bores (9, 10) for the pressure accumulator pistons (12, 12') and is connected through a pressure fluid bore (15) to the location bore (7) of the pressure generating element (5).

3. Hydraulic unit as claimed in claim 2,
**characterised** in that the pressure fluid bore (15), by way of the hermetically sealable location bore (11), provides for a hydraulic connection between the delivery side of the pressure generating element (5) and the channel (16) leading to the pressure fluid supply means (14).

4. Hydraulic unit as claimed in claim 1,
**characterised** in that the location bore (7) accommodating the pressure generating element (5) is arranged in parallel between the two valve rows (x, y).

5. Hydraulic unit as claimed in claim 1,
**characterised** in that the location bore (8) including the drive elements (6) are aligned vertically and concentrically to the location bore (7) of the pressure generating element.

6. Hydraulic unit as claimed in claim 3,
**characterised** in that the channel (16) connecting the hermetically sealable location bore (11) to the pressure fluid supply means (14) is provided with a filter element (17) extending into the location bore (11) and a restrictor (27), and in that the channel (16) in the mounting position of the hydraulic unit is provided with a geodetic level difference relative to the pressure fluid bore (15) of the pressure generating element (5) which permits the venting of the location bore (11).

7. Hydraulic unit as claimed in claim 3,
**characterised** in that the channel (16) has a non-return valve (18) opening in the direction of the pressure fluid supply means (14), and in that between the channel section connecting the non-return valve (18) with the pressure fluid supply means (14), respectively, another hydraulic connection is established to the pressure fluid consumer (19) by way of a valve element (2') which, in its normal position, is electromagnetically open.

8. Hydraulic unit as claimed in claim 1 or claim 2,
**characterised** in that the location bore (9,10) of the pressure generating element and/or the location bore (11), acting as a damping chamber which can be hermetically sealed, accommodates a generally disc-shaped pressure fluid deviation device (20) that is oriented so as to be preferably positively engaged and permits the venting of the location bores (9,10) because its pressure fluid opening is in a higher position from a geodetically point of view.

9. Hydraulic unit as claimed in claim 1,
**characterised** in that the location bores (9,10) arranged outside the two valve rows (x,y) in the valve accommodating element (3) can be closed by means of a cover (21) which is made of one piece.

10. Hydraulic unit as claimed in claim 9,
**characterised** in that the cover (21) is a deep drawn part.

11. Hydraulic unit as claimed in claim 9,
**characterised** in that the cover (21) is retained in the valve accommodating member (3) by means of a self-tapping member.

12. Hydraulic unit as claimed in at least one of the preceding claims 9 to 11,
**characterised** in that the cover (21) is provided with a leakage and pressure relief bore (22) which can be closed by means of a sealing ring (23) arranged at the circumference of the cover and functioning as a non-return valve.

13. Hydraulic unit as claimed in claim 1,
**characterised** in that the pressure accumulator pistons (12,12') are formed as deep drawn parts.

14. Hydraulic unit as claimed in claim 1,
**characterised** in that in each of several location bores of the accommodating element (3) outside the two valve rows is inserted a pressure accumulator piston (12) in such a way that the piston can be moved to abut on an annular stop portion (32) provided in the location bore (9), and in that the stop portion (32) has a cover (21) which closes the stop portion (32) in the location bore (9).

15. Hydraulic unit as claimed in claim 14,
**characterised** in that the stop portion (32) can be positioned in a variable manner in the direction of the bore depth of the location bore (9) by means of several recesses (33) in the wall of the location bore (9).

16. Hydraulic unit as claimed in claim 14,
**characterised** in that the pressure accumulator piston (12) has a cup-shaped design and can be moved to abut on the stop portion (32) with its opening extending towards the outer contour of the valve accommodating member (3).

17. Hydraulic unit as claimed in claim 15,
**characterised** in that the recess (33) is an annular groove having a chamfering (34) that extends in the direction of the pressure accumulator piston (12), and in that a wire ring acting as a stop portion (32) can be locked into the recess (33).

## Revendications

1. Ensemble hydraulique pour systèmes de freinage à régulation anti-patinage, comportant plusieurs éléments fonctionnels pouvant être actionnés de façon mécanique, et/ou électrique, montés sur un corps récepteur (3), par exemple des éléments accumulateurs, soupapes, générateurs de pression ou d'entraînement (1, 1', 5, 6), comprenant plusieurs canaux de fluide de pression (4, 15, 16) reliant les éléments fonctionnels les uns aux autres et pouvant établir une communication à commande hydraulique entre au moins une source de fluide sous pression (14) et un consommateur (19) de fluide sous pression, et comprenant un dispositif de commande pouvant être relié aux éléments soupapes et aux éléments d'entraînement (1, 1', 6) par l'intermédiaire de conducteurs électriques, les éléments soupapes (1, 1') étant disposés dans plusieurs alésages récepteurs (2, 2') de soupapes du corps récepteur (3) de soupapes, dans des première et seconde rangées (x, y) de soupapes; plusieurs passages (4) de fluide de pression, reliant les éléments soupapes (1, 1') les uns aux autres, ainsi que des alésages récepteurs (7, 8) contenant l'élément générateur de pression (5) et l'élément d'entraînement (6), étant prévus entre les deux rangées de soupapes (x, y) orientées diamétralement, l'élément générateur de pression (5) étant situé entre les plans de raccordement des éléments soupapes (5) et de l'élément d'entraînement (6),
caractérisé en ce que
- pour assurer l'accumulation de fluide sous pression, d'autres alésages récepteurs (9, 10), dont les axes sont orientés parallèlement l'un à l'autre, débouchent dans le corps récepteur (3) de soupapes, à l'extérieur des deux rangées de soupapes (x, y), ces alésages étant orientés perpendiculairement aux alésages récepteurs (2, 2') de soupapes;
- pour assurer l'accumulation de fluide sous pression, respectivement un piston (12, 12') d'accumulateur de pression est inséré dans l'alésage récepteur correspondant (9, 10), qui comporte une communication, par l'intermédiaire d'un passage (13) de fluide de pression, avec l'alésage récepteur (7) de l'élément générateur de pression (5) et avec l'alésage récepteur (2) d'un élément soupape électromagnétique (1) fermé au repos;
- les soupapes électromagnétiques (1) fermées au repos sont disposées exclusivement dans la première rangée (x) de soupapes tournée face au piston (12, 12') d'accumulateur de pression;
- et en ce que les éléments soupapes électromagnétiques (1') ouverts au repos sont disposés dans la seconde rangée (y) de soupapes.

2. Ensemble hydraulique selon la revendication 1, caractérisé en ce qu'un alésage récepteur supplémentaire (11) du silencieux est respectivement agencé à côté des alésages récepteurs (9, 10) pour les pistons (12, 12') d'accumulateur de pression, l'alésage supplémentaire étant relié, par l'intermédiaire d'un passage (15) de fluide de pression, à l'alésage récepteur (7) de l'élément générateur de pression (5).

3. Ensemble hydraulique selon la revendication 2, caractérisé en ce que le passage (15) de fluide de pression établit une communication hydraulique entre le côté refoulement de l'élément générateur de pression (5) et le canal (16) relié au dispositif d'alimentation (14) en fluide sous pression, par l'intermédiaire de l'alésage récepteur (11) pouvant être obturé hermétiquement.

4. Ensemble hydraulique selon la revendication 1, caractérisé en ce que l'alésage récepteur (7) contenant l'élément générateur de pression (5) est disposé entre les deux rangées de soupapes (x, y), parallèlement à celles-ci.

5. Ensemble hydraulique selon la revendication 1, caractérisé en ce que l'alésage récepteur (8) contenant les éléments d'entraînement (6) est orienté perpendiculairement à l'alésage récepteur (7) de l'élément générateur de pression, et concentriquement par rapport à celui-ci.

6. Ensemble hydraulique selon la revendication 3, caractérisé en ce que le canal (16), qui relie l'alésage récepteur supplémentaire (11), pouvant être hermétiquement fermé, au dispositif d'alimentation (14) en fluide sous pression, comporte un élément filtrant (17) s'étendant à l'intérieur de l'alésage récepteur (11), ainsi qu'un diaphragme (27), et en ce qu'en position de montage de l'ensemble hydraulique, le canal (16) présente une différence de hauteur géodésique par rapport au passage (15) de fluide sous pression du générateur de pression (5), qui favorise la purge de l'alésage récepteur (11).

7. Ensemble hydraulique selon la revendication 3, caractérisé en ce que le canal (16) est pourvu d'un clapet de non-retour (18) s'ouvrant en direction du dispositif d'alimentation (14) en fluide sous pression, et en ce que respectivement une autre communication hydraulique est prévue entre le tronçon du canal, qui relie le clapet de non-retour (18) au dispositif d'alimentation (14) en fluide sous pression, et le consommateur (19) de fluide sous pression, en passant par un élément soupape électromagnétique respectif (2') ouvert au repos.

8. Ensemble hydraulique selon la revendication 1 ou 2, caractérisé en ce qu'un dispositif (20) de renvoi du fluide sous pression essentiellement configuré en forme d'une rondelle et de préférence aligné par conjugaison des formes est disposé dans l'alésage récepteur (9, 10) de l'élément accumulateur de pression et/ou dans l'alésage récepteur supplémentaire (11) servant de chambre d'amortissement et pouvant être hermétiquement fermé, dispositif dont l'orifice de fluide géodésiquement surélevé favorise la possibilité de purge des alésages récepteurs (9, 10).

9. Ensemble hydraulique selon la revendication 1, caractérisé en ce que les deux alésages récepteurs (9, 10) aménagés dans le corps récepteur (3) de soupapes, à l'extérieur par rapport aux deux rangées de soupapes (x, y), peuvent être fermés au moyen d'un couvercle monobloc (21).

10. Ensemble hydraulique selon la revendication 9, caractérisé en ce que le couvercle (21) est réalisé sous forme d'une pièce emboutie.

11. Ensemble hydraulique selon la revendication 9, caractérisé en ce que le couvercle (21) est maintenu sur le corps récepteur (3) de soupapes grâce à un montage autotaraudeur.

12. Ensemble hydraulique selon l'une au moins des revendications précédentes 9 à 11, caractérisé en ce que le couvercle (21) est pourvu d'un trou d'évacuation des fuites et de décompression (22), qui peut être fermé au moyen d'une bague d'étanchéité (23) entourant le contour du couvercle, assurant la fonction d'un clapet de non-retour.

13. Ensemble hydraulique selon la revendication 1, caractérisé en ce que les pistons (12, 12') d'accumulateur de pression sont réalisés sous forme de pièces embouties.

14. Ensemble hydraulique selon la revendication 1, caractérisé en ce que respectivement un piston (12) d'accumulateur de pression est inséré dans plusieurs alésages récepteurs du corps récepteur (3) de soupapes, aménagés à l'extérieur des deux rangées de soupapes, de manière telle que ce piston puisse venir en appui sur un élément annulaire de butée (32) inséré dans l'alésage récepteur (9), et en ce qu'un couvercle (21) est associé à l'élément de butée (32), qui enferme l'élément de butée (32) dans l'alésage récepteur (9).

15. Ensemble hydraulique selon la revendication 14, caractérisé en ce que l'élément de butée (32) peut être positionné de façon variable à différents endroits dans le sens de la profondeur de l'alésage récepteur (9), grâce à plusieurs évidements (33) ménagés dans la paroi de l'alésage récepteur (9).

16. Ensemble hydraulique selon la revendication 14, caractérisé en ce que le piston (12) d'accumulateur de pression est réalisé en forme de boisseau, dont l'ouverture orientée face au contour extérieur du corps récepteur (3) de soupapes peut venir en butée sur l'élément de butée (32).

17. Ensemble hydraulique selon la revendication 15, caractérisé en ce que l'évidement (33) est réalisé sous forme d'une gorge annulaire pourvue d'un chanfrein (34) dirigé en direction du piston (12) d'accumulateur de pression, et en ce qu'un jonc servant d'élément de butée (32) peut être enclenché dans l'évidement (33).
